(19) Europäisches Patentamt
European Patent Office
Office européen des brevets

(11) Publication number: 0 027 329
B1

(12) **EUROPEAN PATENT SPECIFICATION**

(45) Date of publication of patent specification: 02.03.83

(51) Int. Cl.[3]: B 01 J 8/02, C 07 C 1/04

(21) Application number: 80303428.9

(22) Date of filing: 29.09.80

# (54) Catalytic process and apparatus therefor.

(30) Priority: 15.10.79 GB 7935687

(43) Date of publication of application:
22.04.81 Bulletin 81/16

(45) Publication of the grant of the patent:
02.03.83 Bulletin 83/9

(84) Designated Contracting States:
DE FR GB IT

(56) References cited:
BE - A - 514 585
DE - C - 914 131
FR - A - 2 089 755
GB - A - 797 574
US - A - 2 255 058
US - A - 2 280 089
US - A - 2 433 345
US - A - 2 852 545

(73) Proprietor: IMPERIAL CHEMICAL INDUSTRIES PLC
Imperial Chemical House Millbank
London SW1P 3JF (GB)

(72) Inventor: Andrew, Sydney Percy Smith
Holland Fen 83 Hutton Avenue
Hartlepool Cleveland (GB)

(74) Representative: Gratwick, Christopher et al,
Imperial Chemical Industries PLC Legal
Department: Patents Thames House North
Millbank
London SW1P 4QG (GB)

EP 0 027 329 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Catalytic process and apparatus therefor

This invention relates to catalytic processes, particularly exothermic solid-catalysed gas phase processes, and to apparatus for use therein.

In many such processes, the gaseous feedstock is fed to a reactor containing a catalyst bed wherein the reaction takes place. Unreacted feedstock, containing the reaction products entrained therein, is removed from the reactor, via an outlet port.

Examples of such reactions include ammonia and methanol synthesis. Another solid-catalysed gas phase reaction is the Fischer-Tropsch reaction wherein carbon monoxide and hydrogen react to form hydrocarbons, viz

$$n\,CO + 2nH_2 \rightleftharpoons C_nH_{2n} + n\,H_2O$$

Such reactions are reversible and to shift the equilibrium to increase the product yield it is desirable to remove the product from the system. Also in some cases further reactions can occur: for example, in the Fischer-Tropsch reaction, not only can the chain length of the hydrocarbons produced increase:

$$C_nH_{2n} + CO + 2H_2 \rightarrow C_{n+1}\,H_{2n+2} + H_2O$$

but also the olefins can be hydrogenated:

$$C_nH_{2n} + H_2 \rightarrow C_n\,H_{2n+2}$$

In the present invention the product is separated inside the reactor thus shifting the equilibrium in favour of the desired product and also removing the product so that it is not available for such further, undesired, reactions. Separation of the product is effected by causing it to condense on to cooled downwardly extending surfaces situated within the catalyst bed: the condensed product then flows down the surfaces and is collected at a region of the reactor below the catalyst bed.

While it is known to provide heat transfer surfaces inside catalyst beds in order to remove the heat of reaction, in general such surfaces have not been cooled to such an extent that the product condenses thereon: thus such surfaces have often formed part of a heat transfer system absorbing heat evolved during the reaction and transferring it to the gaseous feedstock to heat the latter to the desired inlet temperature. Furthermore such surfaces have heretofore been in contact with the catalyst, and so have not removed any product condensing thereon from the influence of the catalyst and so have not significantly affected the equilibrium or prevented unwanted reactions.

According to the present invention a method of performing an exothermic solid-catalysed gas phase reaction in which a condensable product is produced comprises passing the gaseous feedstock through a catalyst bed wherein the reaction takes place and extending through at least part of which are a plurality of downwardly disposed members each surrounded by perforate catalyst restraining means to maintain the catalyst out of contact with said members, cooling said members so as to remove heat from said reaction and to cause said condensable product to condense as a liquid on the surfaces of said members, and collecting the liquid product condensed on, and flowing down down, the surfaces of said members.

As a further feature of the invention we provide an apparatus for conducting a solid-catalysed gas phase exothermic reaction in which a condensable product is produced comprising a vessel containing a catalyst bed through which the gaseous feedstock may be passed and a plurality of downwardly disposed members extending through at least part of said bed, each of said members being surrounded by perforate catalyst restraining means spaced from said members to maintain the catalyst out of contact therewith, means to cool said members to cause product of the reaction to condense as a liquid on the surfaces thereof, and means to collect liquid product condensed on, and flowing down, the surfaces of said members.

The downwardly disposed members are preferably tubes through which a suitable coolant is passed. The number and surface area of the cooled members that are required can be calculated: they should be such that the required temperature profile is given to the reaction gas with the temperature of said surfaces at such a value that the product condenses thereon. Where the process is of the type where the product could react further, it will be appreciated that the number and area of the cooled surfaces should be such that the reaction proceeds to the desired degree before condensation of the product.

The gas feedstock may be fed so that it flows vertically or laterally through the catalyst bed. Where it flows vertically, it preferably flows down through the catalyst bed.

It will be appreciated that, in order to obtain the desired temperature profile, the cooled members need not extend through all of the catalyst bed, but through any part thereof. Preferably the cooled members are loated in at least the outlet region of the catalyst bed, i.e. the region from which unreacted feedstock and/or any gaseous by-product of the reaction is removed. Thus, where the gaseous feedstock is fed so that it flows downwardly through the bed, the cooled members may extend only through the lower part of the catalyst bed.

The cooled members extend downwardly through the bed so that product condensed on the surfaces thereof can flow, under the

influence of gravity, to a collection zone from whence the condensed liquid product may be removed by means of a suitable pipe or conduit. The condensed product collection zone is preferably located in a region of the vessel below the bottom of the catalyst bed with the downwardly disposed members extending below the bottom of the catalyst bed.

The cooled members may be disposed vertically or may be disposed, less preferably, inclined at an angle, for example of up to 30°, to the vertical.

Each downwardly disposed member e.g. tube, is surrounded by a perforate catalyst restraining means to keep the catalyst out of contact with the cooled surface of the downwardly disposed member. The perforate catalyst restraining means may be a wire mesh or a perforate metal tube surrounding the cooled surface. Preferably the catalyst restraining means, while preventing passage of the catalyst therethrough, offers little resistance to the passage of gas. The spacing of the catalyst restraining means from the cooled surface should be greater than the thickness of the film or downwardly flowing product condensed on the cooled surface.

It will be appreciated that to obtain the desired temperature profile, it may be desirable to make some parts of the catalyst restraining means less perforate, or imperforate, to reduce contact of the gaseous feedstock with the cooled surfaces of the downwardly disposed members and hence reduce the degree of cooling of the gaseous feedstock. In particular where the downwardly disposed members extend through a region of the vessel, e.g. a space above the top of the catalyst bed, from which the feedstock passes to the catalyst bed, imperforate extensions to the catalyst restraining means may be provided surrounding those portions of the downwardly disposed members extending through this region.

In one form of the apparatus the gas may exit from the catalyst bed via the space between the downwardly disposed members and the catalyst restraining means. In this case, if the catalyst restraining means extends below the catalyst bed to the condensed product collection zone, that extension of the catalyst restraining means should also be perforate.

The catalyst may be in the form of pellets, rings, mouldings, e.g. a honeycomb, or any other conventional form. Preferably, and in particular where the gas exit is not via the space between the catalyst restraining means and the downwardly disposed members, the catalyst geometry is such that there is a low pressure drop through the catalysed bed and a vigorous lateral movement is imparted to the gas flowing through the catalyst bed so that the gas is caused to impinge upon the cooled surfaces of the downwardly disposed members. The preferred catalyst geometry is a suitably designed honeycomb or a particulate gas directing form such as randomly disposed Raschig rings.

The chemical nature of the catalyst will of course depend on the nature of the exothermic reaction that is required to take place. Likewise the temperatures, pressures, and gas flow rates employed will depend on the nature of the gas feed and the process.

The invention is further illustrated by reference to the accompanying drawings wherein

Figure 1 is a diagrammatic cross section through a reactor in accordance with the invention.

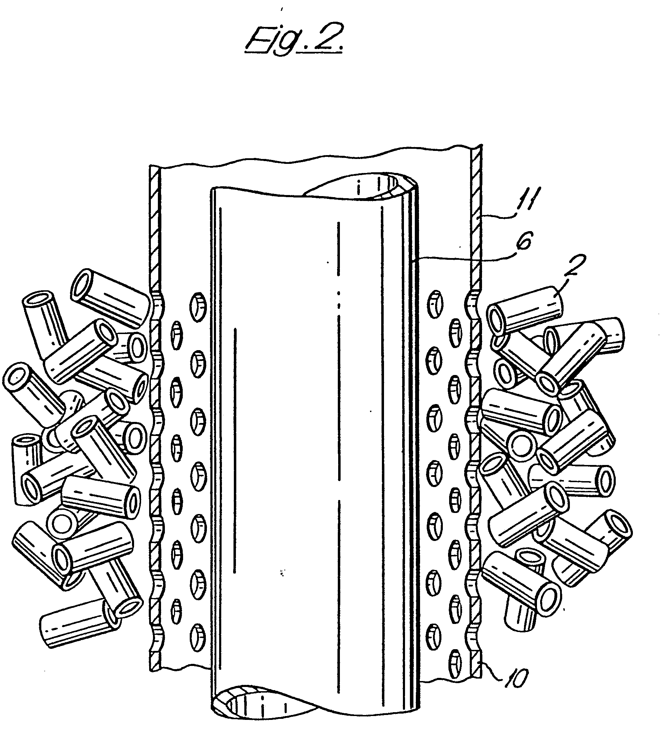

Figure 2 is an enlargement of the circle portion of Figure 1.

The apparatus consists of a vessel 1 containing a bed 2 of catalyst in the form of Raschig rings formed from, or coated with, the catalytic material. The bed is supported on a mesh 3. The gaseous feedstock is fed to the catalyst bed via an inlet 4 and reacted gas is exhausted via an outlet 5. A plurality of vertical coolant tubes 6 pass through the catalyst bed 2. Coolant is supplied to the tubes from a header tank 7 and coolant is removed from the system via a sump 8 and outlet 9. Alternatively the coolant may flow in the reverse direction, i.e. it may be pumped into the sump 8 and up tubes 6 into tank 7.

Within the catalyst bed each coolant tube 6 is surrounded by a perforated tube 10 which serves to restrain the catalyst rings from contacting the exterior surface of the tubes 6 while permitting passage of gas through the perforations. The parts of the catalyst restraining tubes 10 below mesh 3 may be imperforate. Imperforate extensions 11 of tubes 10 are provided through space 12 above catalyst bed 2 so as to provide a shield to prevent premature cooling of the gaseous feedstock entering the space 12 above the catalyst bed 2 from inlet 4.

At the bottom of vessel 1 the condensed product that has flowed down the exterior surfaces of tubes 6 is collected and removed via outlet 13.

In a modified version, in place of mesh 3 the catalyst bed is supported on a plate provided with holes through which the tubes 6 pass without contacting the catalyst bed support plate. If desired, the perforate catalyst restraining tubes 10 may be supported by the plate and/or may extend through the plate to the liquid product collection zone. In this modified embodiment the gas is forced to flow to the outlet 5 via the space 14 between the perforate tubes 10 and the exterior of cooled tubes 6, ie. through the holes around tubes 6 in the catalyst bed support plate. Where the tubes 10 extend through the plate the parts 15 of the tubes 10 extending through the space 16 below the catalyst bed support plate are perforate to permit the reacted gas to flow from the space 14 between the tubes 10 and tubes 6 into space 16 and thence to the outlet 5.

## Claims

1. Apparatus for conducting a solid-catalysed gas phase exothermic reaction in which a condensable product is produced comprising a vessel containing a catalyst bed through which the gaseous feedstock may be passed, characterised by a plurality of downwardly disposed members extending through at least part of said bed, each of said members being surrounded by perforate catalyst restraining means spaced from said members to maintain the catalyst out of contact therewith, means to cool said members to cause product of the reaction to condense as a liquid on the surfaces thereof, and means to collect liquid product condensed on, and flowing down, the surfaces of said members.

2. Apparatus according to claim 1 characterised in that the downwardly disposed members are tubular and means are provided to pass a coolant through said tubular members to cool the exterior surfaces thereof.

3. Apparatus according to claim 1 or claim 2 characterised in that the perforate catalyst restraining means comprises a wire mesh or perforate metal tube surrounding and spaced from each of the downwardly disposed members.

4. Apparatus according to any one of claims 1 to 3 wherein the catalyst bed has an inlet region to which the feedstock is introduced and an outlet region from which unreacted feedstock and/or gaseous by-product of the reaction is removed from the catalyst bed, characterised in that the downwardly disposed members are located in at least the outlet region of the catalyst bed.

5. Apparatus according to any one of claims 1 to 4 characterised in that the means to collect the condensed liquid product is located below the bottom of the catalyst bed and said downwardly disposed members extend below the bottom of the catalyst bed.

6. Apparatus according to claim 5 characterised in that the catalyst bed is supported at the bottom thereof by a plate having holes therein through which the downwardly disposed members pass without contacting the plate.

7. Apparatus according to claim 6 characterised in that perforate extensions to the catalyst restraining means extend through the catalyst bed support plate to the condensed liquid product collection means.

8. Apparatus according to any one of claims 1 to 7 wherein a space is provided above the top of the catalyst bed into which the gaseous feedstock is fed characterised in that the downwardly disposed members extend through this space into the catalyst bed and each catalyst restraining means is provided with an upward extension through said space said extension being imperforate so that the gaseous feedstock in the space above the top of the catalyst bed is shielded from the downwardly disposed members.

9. A method of performing an exothermic solid-catalysed gas phase reaction in which a condensable product is produced comprises passing the gaseous feedstock through a catalyst bed wherein the reaction takes place, removing heat from the reacted feedstock and condensing the product characterised by providing a plurality of downwardly disposed members extending through at least part of said catalyst bed, each of said members being provided with perforate catalyst restraining means to maintain said catalyst out of contact with said members, cooling said members so as to remove heat from said reaction and to cause said condensable product to condense as a liquid on the surfaces of said members, and collecting the liquid product condensed on, and flowing down, the surfaces of said members.

## Patentansprüche

1. Apparat zur Durchführung einer durch einen festen Katalysator katalysierten, exothermen Gasphasenreaktion, bei der ein kondensierbares Produkt erzeugt wird, wobei der Apparat einen Behälter aufweist, der ein Katalysatorbett enthält, durch das das gasförmige Einsatzmaterial hindurchgeleitet werden kann, gekennzeichnet durch eine Vielzahl von nach unten gerichtet angeordneten Elementen, die sich durch mindestens einen Teil des Katalysatorbettes erstrecken,

wobei jedes der Elemente von einem gelochten Mittel zum Zurückhalten des Katalysators, das mit Abstand von dem Element angeordnet ist, um den Katalysator außer Berührung mit dem Element zu halten, umgeben ist,

ein Mittel zum Kühlen der Elemente, das dazu dient, das Reaktionsprodukt als Flüssigkeit auf den Oberflächen der Elemente zu kondensieren, und

ein Mittel zum Sammeln des auf den Oberflächen der Elemente kondensierten und daran herabfließenden, flüssigen Produkts.

2. Apparat nach Anspruch 1, dadurch gekennzeichnet, daß die nach unten gerichtet angeordneten Elemente rohrförmig sind und daß Mittel zum Hindurchleiten eines Kühlmittels durch die rohrförmigen Elemente zwecks Kühlung der Außenflächen der rohrförmigen Elemente vorgesehen sind.

3. Apparat nach Anspruch 1 oder 2, dadurch gekennzeichnet, daß die gelochten Mittel zum Zurückhalten des Katalysators aus einem Drahtgeflecht oder gelochten Metallrohr bestehen, das jedes der nach unten gerichtet angeordneten Elemente umgibt und mit Abstand von dem Element angeordnet ist.

4. Apparat nach einem der Ansprüche 1 bis 3, worin das Katalysatorbett einen Einlaßbereich, in den das Einsatzmaterial eingeleitet wird, und einen Auslaßbereich, aus dem nicht

umgesetztes Einsatzmaterial und/oder gasförmiges Nebenprodukt der Reaktion von dem Katalysatorbett her entfernt werden, aufweist, dadurch gekennzeichnet, daß die nach unten gerichtet angeordneten Elemente in mindestens dem Auslaßbereich des Katalysatorbettes angeordnet bzw. angebracht sind.

5. Apparat nach einem der Ansprüche 1 bis 4, dadurch gekennzeichnet, daß das Mittel zum Sammeln des kondensierten, flüssigen Produkts unterhalb des Bodens des Katalysatorbettes angebracht ist und daß sich die nach unten gerichtet angeordneten Elemente bis unter den Boden des Katalysatorbettes erstrecken.

6. Apparat nach Anspruch 5, dadurch gekennzeichnet, daß das Katalysatorbett an seinem Boden von einer Platte gestützt, bzw. getragen wird, in der sich Löcher befinden, durch die die nach unten gerichtet angeordneten Elemente hindurchgehen, ohne die Platte zu berühren.

7. Apparatus nach Anspruch 6, dadurch gekennzeichnet, daß sich gelochte Verlängerungen der Mittel zum Zurückhalten des Katalysators durch die das Katalysatorbett stützende bzw. tragende Platte hindurch bis zu dem Mittel zum Sammeln des kondensierten, flüssigen Produkts erstrecken.

8. Apparat nach einem der Ansprüche 1 bis 7, worin oberhalb der Oberseite des Katalysatorbettes ein Raum vorgesehen ist, in den das gasförmige Einsatzmaterial eingeleitet wird, dadurch gekennzeichnet, daß sich die nach unten gerichtet angeordneten Elemente durch diesen Raum hindurch in das Katalysatorbett hinein erstrecken und daß jedes der Mittel zum Zurückhalten des Katalysators eine oben befindliche, durch den Raum hindurchgehende Verlängerung aufweist, die nicht gelocht ist, so daß das gasförmige Einsatzmaterial in dem Raum oberhalb der Oberseite des Katalysatorbettes gegen die nach unten gerichtet angeordneten Elemente abgeschirmt wird.

9. Verfahren zur Durchführung einer durch einen festen Katalysator katalysierten, exothermen Gasphasenreaktion, bei der ein kondensierbares Produkt erzeugt wird, wobei das gasförmige Einsatzmaterial durch ein Katalysatorbett, in dem die Reaktion stattfindet, hindurchgeleitet, aus dem umgesetzten Einsatzmaterial Wärme abgeführt und das Produkt kondensiert wird, dadurch gekennzeichnet, daß man eine Vielzahl von nach unten gerichtet angeordneten Elementen vorsieht, die sich durch mindestens einen Teil des Katalysatorbettes erstrecken, wobei jedes der Elemente ein gelochtes Mittel zum Zurückhalten des Katalysators, das dazu dient, den Katalysator außer Berührung mit dem Element zu halten, aufweist, daß die Elemente gekühlt werden, um aus der Reaktion Wärme abzuführen und das kondensierbare Produkt als Flüssigkeit auf den Oberflächen der Elemente zu kondensieren, und daß das auf den Oberflächen der Elemente kondensierte und daran herabfließende, flüssige Produkt gesammelt wird.

**Revendications**

1. Appareil pour effecteur une réaction exothermique en phase gazeuse catalysée par un solide, au cours de laquelle un produit condensable est formé, comprenant un récipient contenant un lit de catalyseur à travers lequel la charge gazeuse peut être envoyée, caractérisé par des éléments dirigés vers le bas s'étendant à travers une partie au moins de ce lit, chacun de ces éléments étant entouré par des moyens perforés de retenue de catalyseur écartés desdits éléments, afin de maintenir le catalyseur hors de contact avec ceux-ci, des moyens pour refroidir ces éléments afin que le produit de la réaction se condense sous forme d'un liquide sur leurs surfaces, et des moyens pour recueillir le produit liquide condensé sur les surfaces de ces éléments et s'écoulant vers le bas le long desdites surfaces.

2. Appareil suivant la revendication 1, caractérisé en ce que les éléments dirigés vers le bas sont tubulaires et en ce que des moyens sont prévus pour faire passer un agent de refroidissement à travers ces éléments tubulaires afin de refroidir leurs surfaces extérieures.

3. Appareil suivant la revendication 1 ou 2, caractérisé en ce que les moyens perforés de retenue du catalyseur comprennent un treillis ou un tube métallique perforé entourant les éléments dirigés vers le bas et écartés de chacun d'eux.

4. Appareil suivant l'une quelconque des revendications 1 à 3, selon lequel le lit de catalyseur comprend une zone d'entrée dans laquelle la charge est introduite et une zone de sortie à partir de laquelle la charge n'ayant pas réagi et/ou les sous-produits gazeux de la réaction sont évacués hors du lit de catalyseur, caractérisé en ce que les éléments dirigés vers le bas sont disposés au moins dans la zone de sortie du lit de catalyseur.

5. Appareil suivant l'une quelconque des revendications 1 à 4, caractérisé en ce que les moyens permettant de recueillir le produit liquide condensé sont placés au-dessous de la base de lit de catalyseur, ces éléments dirigés vers le bas s'étendant au-dessous de cette base du lit de catalyseur.

6. Appareil suivant la revendication 5, caractérisé en ce que lit de catalyseur est supporté à sa base par une plaque munie de trous à travers lesquels les éléments dirigés vers le bas passent sans venir en contact avec la plaque.

7. Appareil suivant la revendication 6, caractérisé en ce que des prolongements perforés des moyens de retenue de catalyseur s'étendent à travers la plaque supportant le lit de catalyseur jusqu'aux moyens recueillant le produit liquide condensé.

8. Appareil suivant l'une quelconque des revendications 1 à 7, selon lequel il est prévu au-dessus de la partie supérieure du lit de catalyseur un espace dans lequel la charge gazeuse est introduite, caractérisé en ce que les éléments dirigés vers le bas s'étendent à travers cet espace jusque dans le lit de catalyseur, chaque moyen de retenue de catalyseur étant muni d'un prolongement dirigé vers le haut à travers cet espace, ce prolongement n'étant pas perforé de sorte que la charge gazeuse qui se trouve dans l'espace audessus de la partie supérieure de lit de catalyseur est protégée comme par un écran vis-à-vis des éléments dirigés vers le bas.

9. Procédé pour effectuer une réaction exothermique en phase gazeuse catalysée par un solide au cours de laquelle un produit condensable est formé, consistant à faire passer la charge gazeuse à travers un lit de catalyseur dans lequel la réaction se produit, à évacuer la chaleur à partir de la charge ayant réagi et à condenser le produit, caractérisé en ce qu'on prévoit des éléments dirigés vers le bas s'étendant à travers une partie au moins de ce lit de catalyseur, chacun de ces éléments étant muni de moyens perforés de retenue du catalyseur, afin de maintenir ce catalyseur hors de contact avec, les éléments, on refroidit ces éléments de façon à évacuer la chaleur provenant de la réaction et à provoquer la condensation du produit condensable sous forme d'un liquide à la surface desdits éléments, et on recueille le produit liquide condensé sur les surfaces de ces éléments et s'écoulant vers le bas sur lesdites surfaces.

Fig. 1.

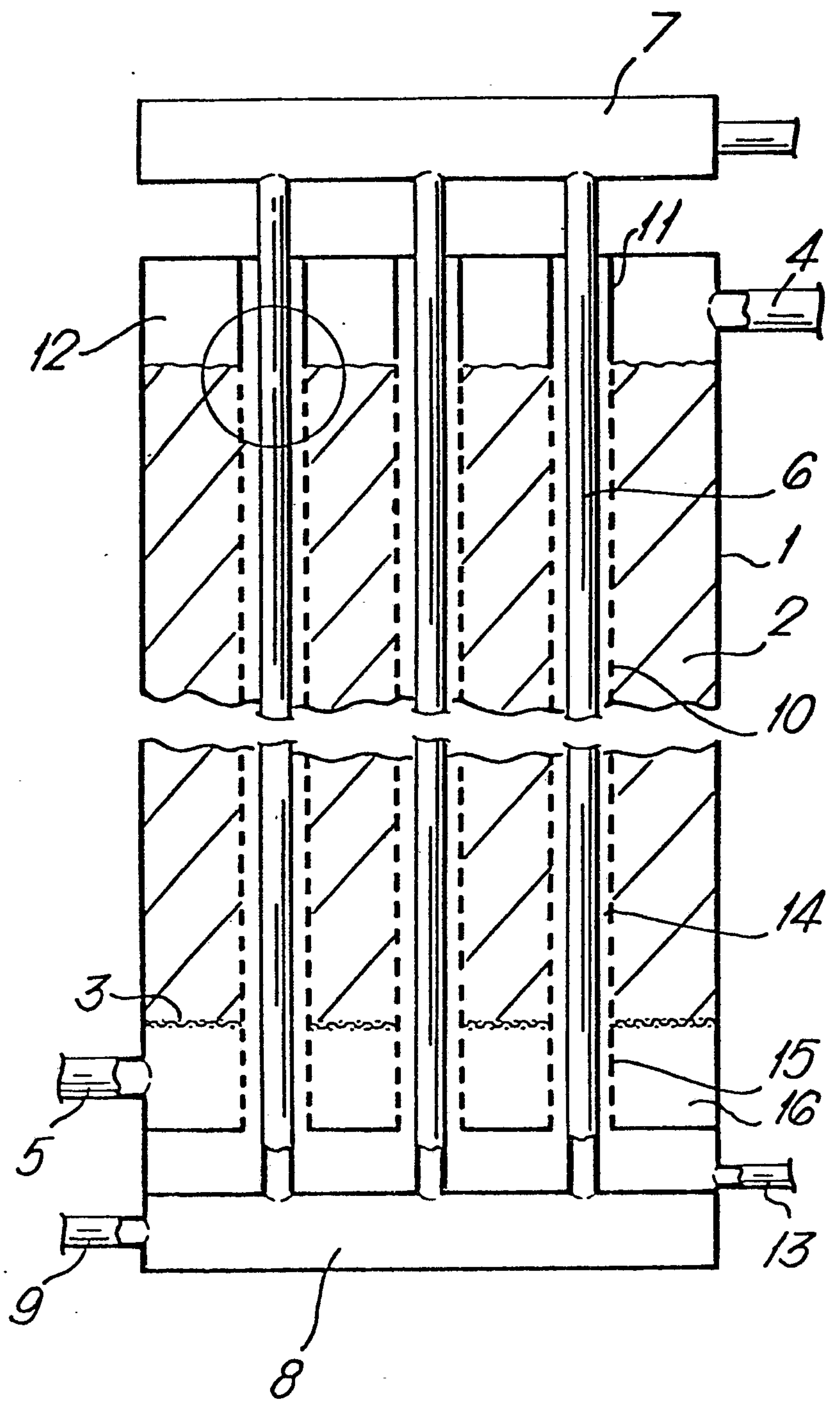

Fig. 2.